# EUROPÄISCHE PATENTANMELDUNG

(11) **EP 0 959 279 A2**
(43) Veröffentlichungstag der Anmeldung: **24.11.1999**
(21) Anmeldenummer: 99109780.9
(22) Anmeldetag: 18.05.1999
(51) Int. Cl.: F16K 11/052, F16K 31/06, F25B 41/04

(54) **Ventil, insbesondere für Kühlmittel in Kühlaggregaten**

(30) Priorität: 18.05.1998 DE 19822215
(71) Anmelder: SCHROTT, Harald, 88131 Lindau (DE)
(72) Erfinder: Ott, Hubert, 88212 Ravensburg (DE)
(74) Vertreter: Patentanwälte Eisele, Otten & Roth

(57) **Zusammenfassung**

Es wird ein Ventil (1), insbesondere zur Verwendung in Kühlmittelkreisläufen von Kühlaggregaten, wie Kühlschränken oder dergleichen, vorgeschlagen, das in heliumdichter Bauweise ausgeführt werden kann, eine extrem niedere interne Leckrate aufweist und mit wenig Aufwand zu fertigen ist und eine hohe Betriebssicherheit gewährleistet. Dies wird dadurch erreicht, daß ein schwenkbarer, vollständig innerhalb einer Ventilkammer (3) befindlicher Ventilhebel (21) mit einem Schließkörper (12) mechanisch gekoppelt wird.

## Beschreibung

Die Erfindung betrifft ein Ventil nach dem Oberbegriff des Anspruchs 1.

An Ventile in Kühlmittelkreisläufen von Kühlaggregaten, z. B. von Kühlschränken werden sehr hohe Anforderungen, vor allem im Hinblick auf die Dichtigkeit nach außen gestellt, um den Austritt von Kühlflüssigkeit aus dem Kühlmittelkreislauf zu vermeiden. Insbesondere sollten derartige Ventile heliumdicht ausgeführt werden.

Im Handel sind bereits Ventile bekannt geworden, bei denen ein Schließkörper im Innern einer Ventilkammer vorgesehen ist, der zugleich den Anker für eine elektromagnetische Spule bildet. Ein solcher Schließkörper bewegt sich in axialer Richtung der Ventilkammer zwischen zwei Dichtsitzen hin und her. Um eine sichere und dichte Schließfunktion des Ventils zu gewährleisten, wird hierbei ein vergleichsweise stark dimensionierter Elektromagnet verwendet, damit der Schließkörper mit einer ausreichenden Haltekraft auf den Dichtsitz gepreßt wird. Dies führt jedoch zwangsläufig auch zu starken Beschleunigungen bei der Betätigung des Ventils verbunden mit entsprechend hartem Aufprall des Schließkörpers auf dem Ventilsitz. Hieraus resultiert ein erhöhter Verschleiß und eine entsprechende, störende Geräuschentwicklung. Bei den genannten handelsüblichen Ventilen wird daher zudem ein Dichtkörper im Schließkörper gegen eine Rückstellkraft gelagert, um eine definierte Presskraft auf dem Ventilsitz einzustellen und so die Dichtung vor übermäßigem Verschleiß zu schützen. Besonders nachteilig ist jedoch das funktionsbedingte große Spiel zwischen Ventilkammer und Schließkörper, worin letztlich die Ursache für eine hohe Leckrate liegt.

Weiterhin sind im Handel Ventile erhältlich, bei denen der Schließkörper über einen Hebelmechanismus betätigt wird, wobei der Hebel aus der Ventilkammer durch eine entsprechende Dichtung herausgeführt wird, so daß die Spulenanordnung zur elektromagnetischen Betätigung nicht mit dem Fluid innerhalb der Ventilkammer in Berührung kommt. Eine derartige Anordnung kann aufgrund der Durchführung des beweglichen Hebels durch die genannte Dichtung den Anforderungen an die Dichtigkeit eines Kühlmittelventils nicht genügen.

Demgegenüber hat die Erfindung die Aufgabe, ein Ventil vorzuschlagen, das in heliumdichter Bauweise ausgeführt werden kann, eine hohe interne Dichtheit aufweist und mit weniger Aufwand zu fertigen ist und eine hohe Betriebssicherheit gewährleistet.

Diese Aufgabe wird ausgehend von Ventilen der einleitend genannten Art durch die kennzeichnenden Merkmale des Anspruchs 1 gelöst.

Dementsprechend zeichnet sich ein erfindungsgemäßes Ventil dadurch aus, daß ein schwenkbarer, vollständig innerhalb der Ventilkammer befindlicher Ventilhebel mit dem Schließkörper mechanisch gekoppelt ist. Dieser Ventilhebel kann insbesondere durch eine außerhalb der Ventilkammer befindlichen elektromagnetische Spule betätigt werden.

Dadurch daß der Ventilhebel vollständig in der Ventilkammer eingeschlossen ist, ist eine entsprechend dichte, beispielsweise heliumdichte Bauart möglich. Durch die Verwendung eines Schwenkhebels ist eine Kraftübersetzung bei der Betätigung des Schließkörpers möglich. Der Schließkörper wird mit seiner Dichtung bzw. Dichtfläche mit einer ausreichenden Presskraft gegen ein entsprechenden Ventilsitz gedrückt, wird jedoch umgekehrt gerade aufgrund der Hebelübersetzung erheblich weniger beschleunigt, als das durch eine elektromagnetische Spule betätigte Ende des Hebels. Insgesamt ist der Weg des Schließkörpers durch die Hebelübersetzung geringer. Ein harter Aufprall des Schließkörpers auf den Ventilsitz ist nicht mehr möglich. Hierdurch wird der Ventilkörper bzw. dessen Dichtfläche oder Dichtung geschont und dennoch eine ausreichende Anpreßkraft auf dem Dichtsitz gewährleistet.

In einer Weiterbildung der Erfindung werden zwei Ventilsitze im Innern der Ventilkammer vorgesehen, zwischen den der Schließkörper hin und her beweglich ist. Somit können wahlweise zwei Öffnungs- bzw. Schließvorgänge jeweils gegenläufig mit einem Ventil betrieben werden.

In Verbindung mit wenigstens drei Anschlußleitungen an die Ventilkammer ergibt sich somit ein 3/2-Wegeventil, das beispielsweise innerhalb von Kühlmittelkreisläufen von Kühlschränken benötigt wird.

In einer besonderen Ausführungsform der Erfindung wird zudem eine Linearführung für den Schließkörper vorgesehen. Diese Linearführung, die beispielsweise als Gleitführung ausgebildet sein kann, sorgt dafür, daß der Schließkörper mit seiner Dichtfläche bzw. seiner Dichtung möglich planparallel und stets an derselben Stelle auf den entsprechenden Dichtsitz aufgedrückt wird. Die Schließfunktion wird hierdurch bei geringerem Anpressdruck erreicht, was weniger Verschleiß und somit eine längere Lebensdauer der Dichtfläche bzw. Dichtung zur Folge hat.

In einer weiteren vorteilhaften Ausführungsform der Erfindung wird die Kopplung zwischen Schließkörper und Ventilhebel so ausgebildet, daß eine Längsverschiebung des Schließkörpers im Bezug zur Längsachse des Ventilhebels möglich ist. Auf diese Weise ist die Realisierung einer Linearführung des Schließkörpers beispielsweise durch einen oder mehrere Führungskörper mit Ausnehmungen, die der Schließkörper wenigstens teilweise durchsetzt möglich. Die Wandung solcher Ausnehmungen oder Bohrungen ergeben zusammen mit dem Schließkörper eine Gleitführung, wobei die Ausrichtung des Schließkörpers um so genauer angegeben wird, je weniger Spiel zwischen dem Schließkörper und seiner Führungafläche vorhanden ist.

In einer Weiterbildung der Erfindung wird ein Permanentmagnet an dem Ventilhebel befestigt. In Verbindung mit außerhalb der Ventilkammer befindlichen, magnetisierbaren Komponenten, beispielsweise Jochblechen einer elektromagnetischen Spule, ergibt sich hierdurch ein bistabiles Magnetventil. Der Hebel wird mit Hilfe des Permanentmagneten in einer seiner beiden Schaltatellungen verbleiben und nur durch impulsartige Beaufschlagung der elektromagnetischen Spule mit entsprechender Polung in seine andere Endstellung geschaltet.

Durch das Anbringen des Permanentmagneten im Innern der Ventilkammer an dem Ventilhebel ergibt sich gegenüber anderen Bauausführungen, die einen Permanentmagneten außerhalb der Ventilkammer vorsehen eine kleinere Dimensionierung des Ventils sowie des Permantmagneten.

Der Permanentmagnet wird je nach Art des mit dem Ventil in Berührung kommenden Fluids bevorzugt gekapselt an dem Ventilhebel angebracht, beispielsweise in eine Kunststoffhebel eingespritzt.

In einer vorteilhaften Ausführungsform dieser Erfindung werden zwei magnetische Pole so angeordnet, daß sich der Permanentmagnet zu den beiden Polen hin und her bewegen kann. Diese magnetischen Pole sind beispielsweise in Form von Eisen- oder Stahlstiften verwirklicht, die dicht in entsprechende Bohrungen des Ventilgehäuses eingepaßt und mit diesem verbunden, beispielsweise verschweißt oder verlötet sind. Insbesondere wird dabei bei hoher Dichtigkeit eine kompakte Bauweise möglich.

In einer Weiterbildung der Erfindung wird ein dritter magnetischer Pol in etwa auf Höhe der Mitte zwischen den beiden vorgenannten Magnetpolen vorgesehen. Dies ermöglicht die Anordnung des Kerns der magnetischen Spule in Längsrichtung zum Ventilhebel. Der dritte magnetische Pol verlängert einen Spulenkern, während in den beiden äußeren Polen ein am gegenüberliegenden Ende der Spule ausgehendes Joch endet.

In einer Weiterbildung der Erfindung werden mechanische Anschläge für die Endposition des Ventilhebels vorgesehen. Hierdurch läßt sich die Maximalkraft zum Verschließen der jeweiligen Ventilsitze vorgeben.

Insbesondere in Verbindung mit einem elastischen Ventilhebel ergibt sich hierdurch eine exakt vorgegebene Einstellung der Anpreßkraft des Schließkörpers auf dem Ventilsitz, der durch das Elastizitätsmodul des Ventilhebels bestimmt wird.

In einer Weiterbildung der Erfindung wird die zugehörige elektromagnetische Spule über ihre Magnetpole fest mit dem Ventilgehäuse verbunden. Hierdurch ergibt sich eine als ganzes handhabbare und montierbare Einheit.

In einer besonderen Ausführungsform der Erfindung wird zudem ein Kunststoffgehäuse für den elektrischen Anschluß der Spule vorgesehen, das zugleich als Montagehalterung dient. Das Kunststoffgehäuse als solches wird üblicherweise aus sicherheitstechnischen Gründen verwendet. Bei gleichzeitiger mechanischer Halterungsfunktion ergibt sich hierdurch eine zusätzliche Dämpfung bzw. Schaltgeräuschminderung von etwaigen Erschütterungen bei Betätigung des Ventils durch die Nachgiebigkeit des Kunststoffgehäuses.

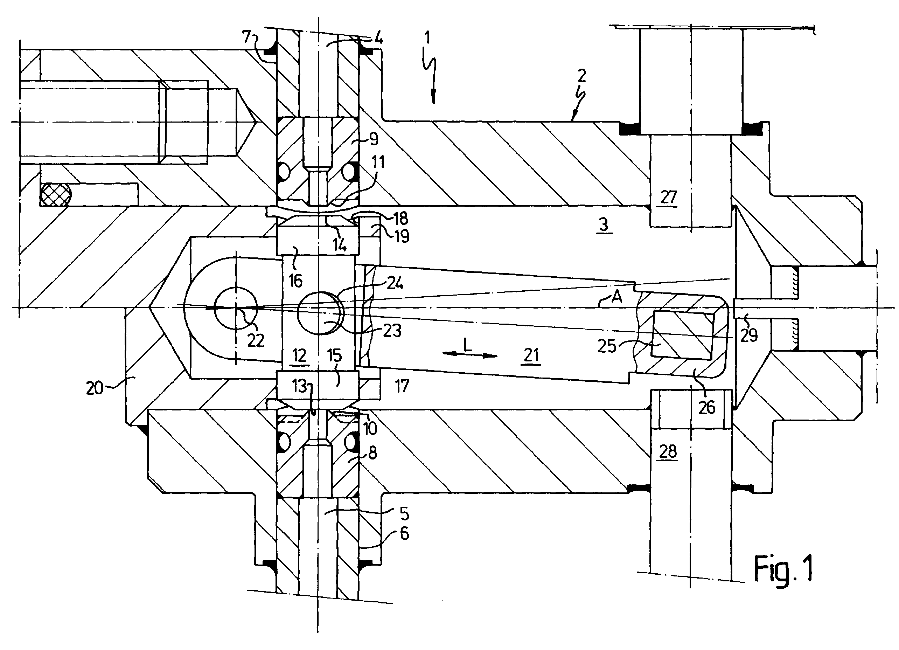

Ein Ausführungsbeispiel der Erfindung ist in der Zeichnung dargestellt und wird anhand der Figuren nachfolgend näher erläutert.

Im einzelnen zeigt die einzige Figur
einen Längsschnitt durch ein erfindungsgemäßes Ventil.

Das Ventil 1 gemäß der Figur umfaßt ein Ventilgehäuse 2, indessen Innern sich eine Ventilkammer 3 befindet. Zwei Anschlußleitungen 4, 5 sind in entsprechende Bohrungen 6, 7 des Ventilgehäuses 2 eingesteckt und dort wasser- und gasdicht, insbesondere heliumdicht verlötet. Die Anschlußleitungen 4, 5 münden in zwei ebenfalls in die Bohrungen 6, 7 eingelassene Endstücke 8, 9, die einen ersten Ventilsitz 10 und einen zweiten Ventilsitz 11 aufweisen.

Ein Schließkolben 12 ist mit zwei gegenüberliegenden Dichtflächen 13, 14 versehen, die planparallel auf den ersten Ventilsitz 10 bzw. zweiten Ventilsitz 11 angepreßt werden können. Ggf. werden auch entsprechende Einlegeteile in den Schließkolben 12 eingelegt, die die Dichtflächen 13, 14 beinhalten.

Der Schließkolben 12 umfaßt zwei Führungsabschnitte 15, 16, die gleitend in zwei Führungen 17, 18 eines Führungskörpers 19 angebracht sind. Vorliegend ist der Führungskörper 19 an einen aufgelöteten Deckel 20 des Ventilgehäuses 2 angeformt.

Ein Ventilhebel 21 ist um eine Schwenkachse 22 drehbar gelagert. Er durchsetzt den Schließkolben 12, wobei ein Mitnehmer 23 in einem Langloch 24 des Schließkolbens 12 gefangen ist. Durch diese Ausbildung der mechanischen Kopplung 23, 24 zwischen Schließkolben 12 und Ventilhebel 21 sind diese beiden Bauteile bezüglich der Längsrichtung des Ventilhebels 21 (vgl. Doppelpfeil L) zueinander beweglich. Dies ermöglicht die genaue axiale Führung des Schließkolbens 12 durch die Führungen 17, 18 durch gleichzeitigen Antrieb mittels der Schwenkbewegung des Ventilhebels 21.

Am anderen Ende des Ventilhebels 21 ist ein Permanentmagnet 25 in einer entsprechenden Kapselung 26 eingeschlossen. Der Permanentmagnet 25 befindet sich zwischen einem ersten magnetischen Pol 27 und einem zweiten magnetischen Pol 28. Ein dritter magnetischer Pol 29 steht quer zur Verbindungslinie zwischen dem ersten und dem zweiten magnetischen Pol 27, 28 in etwa auf Höhe der Mitte des Abstands zwischen dem ersten magnetischen Pol 27 und dem zweiten magnetischen Pol 28.

Alle magnetischen Pole 27, 28, 29 bestehen im dargestellten Ausführungsbeispiel aus einem Eisen- oder Stahlstift, der in das Ventilgehäuse 2 in eine entsprechende Bohrung eingesteckt und dort heliumdicht verlötet ist. Die Form der magnetischen Pole 27, 28, 29 ist dem gewünschten Verlauf der magnetischen Flußlinie angepaßt.

Das dargestellte Ausführungsbeispiel ermöglicht die Montage einer elektromagnetischen Spule zur Betätigung des Ventils 1 koaxial zur Achse A der Ventilkammer 3. Der dritte magnetische Pol 29 geht hierbei unmittelbar in einen Kern der nicht dargestellten Spule über, während der erste magnetische Pol 27 und der zweite magnetische Pol 28 mit einem Jochblech verbunden sind.

Das dargestellte Ventil 1 ist aufgrund der Anordnung der magnetischen Pole 27, 28, 29 in Verbindung mit dem Permanentmagnet 25 ein bistabiles Ventil. Der Hebel 21 wird jeweils in seiner Endstellung gehalten, bis durch eine kurze impulsartige Beaufschlagung der Spule mit der gewünschten Polung die andere Endstellung angesteuert wird. In stromlosen Zustand ist somit jeweils einer der beiden Ventilsitze 10, 11 verschlossen.

Der Schließkolben 12 wird hierbei aufgrund der Hebelübersetzung des Ventilhebels 21 mit einer weitaus größeren Kraft auf den jeweiligen Ventilsitz 10, 11 gedrückt, als der Permanentmagnet 25 von den jeweiligen magnetischen Polen 27, 28 angezogen wird. Daher kann der Permanentmagnet 25 sowie die nicht näher dargestellte elektromagnetische Spule entsprechend kleiner dimensioniert werden.

Die Geschwindigkeit des Schließkolbens 12 während der Betätigung wird ebenfalls aufgrund des Hebelverhältnisses reduziert, wodurch der Impuls, mit dem der Schließkolben 12 auf den Ventilsitz 10, 11 aufprallt, verringert wird.

Durch die Führungen 17, 18 in Verbindung mit den Führungsabschnitten 15, 16 ergibt sich eine Gleitdichtung die für eine gute axiale Führung des Schließkolbens 12 im Bezug zu den Ventilsitzen 10, 11 sorgt. Hierdurch wiederum ist ein genauer planparalleler Andruck der Dichtflächen 13, 14 auf die Ventilsitze 10, 11 möglich. Ein planparallels Anpressen der Dichtflächen 13, 14 auf den Ventilsitzen 10, 11 ermöglicht wiederum einen geringen Anpreßdruck, was einerseits den Verschleiß am Schließkolben 12 bzw. den Dichtflächen 13, 14 reduziert und zugleich eine geringe Dimensionierung der Antriebsmechanik sowie der elektromagnetischen Einheit ermöglicht. Wie bereits erwähnt, können am Schließkolben 12 separate Dichtungselemente angebracht werden, die durch die oben angeführten Maßnahmen ebenfalls vor erhöhtem Verschleiß geschützt werden.

Ein nicht weiter dargestellter dritter Anschluß an dem Ventilkörper 2 kann als Zu- oder Abfluß dienen und je nach Ventilstellung mit dem Anschluß 4 oder dem Anschluß 5 verbunden werden.

Soweit als möglich werden die verschiedenen Ventilteile, insbesondere der Schließkolben 12, aus Kunststoff, z. B. Polyamid, gefertigt.
- 1: Ventil
- 2: Ventilgehäuse
- 3: Ventilkammer
- 4: Anschlußleitung
- 5: Anschlußleitung
- 6: Bohrung
- 7: Bohrung
- 8: Endstück
- 9: Endstück
- 10: erster Ventilsitz
- 11: zweiter Ventilsitz
- 12: Schließkolben
- 13: Dichtflächen
- 14: Dichtflächen
- 15: Führungsabschnitt
- 16: Führungsabschnitt
- 17: Führung
- 18: Führung
- 19: Führungskörper
- 20: Deckel
- 21: Ventilhebel
- 22: Schwenkachse
- 23: Mitnehmer
- 24: Langloch
- 25: Permanentmagnet
- 26: Kapselung
- 27: erster magnetischer Pol
- 28: zweiter magnetischer Pol
- 29: dritter magnetischer Pol

## Patentansprüche

1. Ventil, insbesondere für Kühlmittel in Kühlaggregaten mit einem Ventilgehäuse, in dem sich ein Ventilsitz in einer im Betrieb fluidgefüllten Ventilkammer befindet, wobei ein Schließkörper im Bezug zum Ventilsitz beweglich angeordnet ist, dadurch gekennzeichnet, daß ein schwenkbarer vollständig innerhalb der Ventilkammer (3) befindlicher Ventilhebel (21) mit dem Schließkörper (12) zu dessen Betätigung mechanisch gekoppelt ist.

2. Ventil nach Anspruch 1, dadurch gekennzeichnet, daß zwei Ventilsitze (10, 11) vorgesehen sind, zwischen denen der Schließkörper (12) hin und her beweglich ist.

3. Ventil nach einem der vorgenannten Ansprüche, dadurch gekennzeichnet, daß wenigstens drei Anschlußleitungen (4, 5) vorgesehen sind.

4. Ventil nach einem der vorgenannten Ansprüche, dadurch gekennzeichnet, daß eine Linearführung (17, 18) für den Schließkörper (12) vorgesehen ist.

5. Ventil nach einem der vorgenannten Ansprüche, dadurch gekennzeichnet, daß die Kopplung zwischen dem Schließkörper (12) und dem Ventilhebel (21) eine Längsverschiebung des Schließkörpers (12) im Bezug zur Längsachse des Ventilhebels (21) erlaubt.

6. Ventil nach einem der vorgenannten Ansprüche, dadurch gekennzeichnet, daß ein Permanentmagnet (25) an dem Ventilhebel (21) angebracht ist.

7. Ventil nach einem der vorgenannten Ansprüche, dadurch gekennzeichnet, daß sich der Permanentmagnet (25) zwischen zwei mit einer elektromagnetischen Spule verbundenen magnetischen Polen (27, 28) befindet.

8. Ventil nach Anspruch 7, dadurch gekennzeichnet, daß ein dritter magnetischer Pol (29) in etwa auf Höhe der Mitte zwischen den beiden Magnetpolen (27, 28) vorgesehen ist.

9. Ventil nach einem der vorgenannten Ansprüche, dadurch gekennzeichnet, daß Anschläge für die Endpositionen des Ventilhebels vorgesehen sind.

10. Ventil nach einem der vorgenannten Ansprüche, dadurch gekennzeichnet, daß eine elektromagnetische Spule über die Magnetpole (27, 28, 29) fest mit dem Ventilgehäuse (2) verbunden ist.

11. Ventil nach einem der vorgenannten Ansprüche, dadurch gekennzeichnet, daß ein Kunststoffgehäuse für den elektrischen Anschluß der Spule zusätzlich als Montagehalterung vorgesehen ist.
